# EUROPÄISCHE PATENTSCHRIFT

(11) **EP 1 503 099 B1**
(45) Veröffentlichungstag und Bekanntmachung des Hinweises auf die Patenterteilung: **24.10.2007**
(21) Anmeldenummer: 04018145.5
(22) Anmeldetag: 30.07.2004
(51) Int. Cl.: F16D 23/02

(54) **Verfahren zum Herstellen eines Konusringes, vorzugsweise in Form eines Zwischenringes einer Mehrfachkonussynchronisierung**
Process for producing a cone ring, preferably in the form of a intermediate ring for a multiple synchroniser assembly
Procédé pour la fabrication d'une bague conique, de préférence dans la forme d'une bague intermédiaire d'une unité de synchronisation multiple

(30) Priorität: 30.07.2003 DE 10334844
(43) Veröffentlichungstag der Anmeldung: 02.02.2005
(73) Patentinhaber: Hoerbiger Antriebstechnik GmbH, 86956 Schongau (DE)
(72) Erfinder: Back, Ottmar, 82362 Weilheim (DE); Welzmüller, Max, 82380 Peissenberg (DE)
(74) Vertreter: Schmitz, Hans-Werner

(56) Entgegenhaltungen:
- US-A- 4 770 283
- US-A- 5 408 736
- WINTER H ET AL: "SYNCHRONISIERUNGEN IN KFZ-SCHALTGE-TRIEBEN - EINFLUSS DER WERKSTOFFPAARUNG AUF DAS REIBUNGSVERHALTEN" ANTRIEBSTECHNIK, VEREINIGTE FACHVERLAGE, MAINZ, DE, Bd. 30, Nr. 8, 1. August 1991 (1991-08-01), Seiten 50-58, XP000230652 ISSN: 0722-8546

## Beschreibung

Die Erfindung betrifft ein Verfahren zum Herstellen eines Konusringes, vorzugsweise in Form eines Zwischenringes einer Mehrfachkonussynchronisierung gemäß den Merkmalen des Anspruches 1. Ferner betrifft die Erfindung einen Konusring gemäß dem Oberbegriff des Anspruches 7. Ein solche Konusring ist aus US-A-4,770,283 bekannt.

Synchronisierungen in Schaltgetrieben werden zur Steigerung der Leistungsfähigkeit als Mehrfachkonussynchronisierungen ausgeführt. Der Reibbelag kann dabei für eine Doppelkonussynchronisierung entweder am Innenkonus des Außenringes und Zwischenringes oder am Innenkonus des Außenringes und Außenkonus des Innenringes angeordnet sein. Ferner ist es möglich, den Reibbelag am Außen- und Innenkonus des Zwischenringes anzuordnen. Die wirtschaftlich vorteilhafteste Lösung stellt hierbei die Anordnung des Reibbelages nur am Zwischenring dar.

Zwischenringe mit Streusinterreibbelägen zeichnen sich dabei durch eine sehr kostengünstige Herstellung aus, da sie umformtechnisch ohne spanende Bearbeitung erzeugt werden können.

Ferner sind Zwischenringe mit organischen Reibbelägen, z.B. aus Karbon, bekannt, die auf einem konusförmigen Trägerring aufgeklebt werden müssen. Die Vorbehandlung der Klebeflächen erfordert in der Regel eine spanende Bearbeitung der Konusflächen des Trägerrings.

Zwischenringe mit Streusinterbelag und Zwischenringe mit Karbonbelag haben je nach Einsatzfall Vor- und Nachteile. Streusinterbeläge zeichnen sich durch eine hohe Missbrauchssicherheit aus und sind kostengünstig herstellbar. Karbonbeläge haben demgegenüber den Vorteil bei Einsatz hochadditiver Öle.

Es ist daher Aufgabe der vorliegenden Erfindung, ein Verfahren zum Herstellen eines Konusringes, vorzugsweise in Form eines Zwischenringes einer Mehrfachkonussynchronisierung zu schaffen, der es möglich macht, die Vorteile von Streusinterbelägen mit denjenigen von organischen Belägen bei möglichst gleichzeitiger Kompensierung ihrer Nachteile zu kombinieren.

Die Lösung dieser Aufgabe erfolgt durch das Verfahren gemäß Anspruch 1 bzw. den Konusring gemäß Anspruch 7.

Hierdurch wird erreicht, dass beim erfindungsgemäßen Verfahren zunächst ein erster Reibbelag aus einem ersten Material auf einer ebenen Fläche eines noch ebenen Trägerringes aufgebracht wird. Danach wird der ebene Trägerring mit dem aufgebrachten ersten Reibbelag in einen Konusring umgeformt. Nach diesem Verfahrensschritt wird auf die zweite entstandene konische Fläche des Trägerringes der zweite Reibbelag aufgebracht.

Der Vorteil des erfindungsgemäßen Verfahrens ist darin zu sehen, dass die bei der Umformung entstehende Konusfläche des Trägerringes, die nach der Umformung noch belagfrei ist, ohne spanende Bearbeitung ausreichend genau für die Aufbringung eines zweiten Reibbelages ist.

Die Fertigungsabfolge ermöglicht eine wirtschaftliche und technisch optimale Methode zur Aufbringung zweier Reibbeläge, vorzugsweise aus unterschiedlichen Materialien.

Die Unteransprüche 2 bis 6 haben vorteilhafte Weiterbildungen des Verfahrensanspruchs zum Inhalt.

In Anspruch 7 ist ein erfindungsgemäßer Konusring definiert.

Bei einer besonders bevorzugten Ausführungsform dieses Konusringes übernimmt im Sinne einer Funktionstrennung der aus einem organischen Material, insbesondere Karbon, bestehende Reibbelag, der vorzugsweise am Außenkonus angeordnet ist, die Aufgabe, insbesondere in hoch additivierten Ölen ein günstigeres Reibverhalten sicherzustellen und somit die Sperrfunktion der Synchronisierung zu gewährleisten.

Ist bei dieser besonders bevorzugten Ausführungsform der andere Reibbelag als Streusinterbelag ausgebildet, der vorzugsweise am Innenkonus vorgesehen wird, ergibt sich der Vorteil, dass dieser Streusinterbelag für eine gute Wärmeableitung sorgt, die für die Festigkeit des aus organischem Material bestehenden Reibbelages auch unter großen Belastungen vorteilhaft ist und zum anderen für eine Überlastsicherheit bei Versagen des Belages aus organischem Material sorgt.

Die Unteransprüche 8 bis 11 haben vorteilhafte Weiterbildungen von Anspruch 7 zum Inhalt.

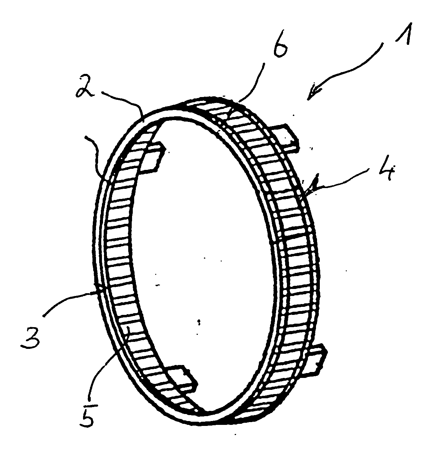

Weitere Einzelheiten, Merkmale und Vorteile der Erfindung ergeben sich aus nachfolgender Beschreibung eines Ausführungsbeispieles anhand der Zeichnung.

Die einzige Figur der Zeichnung zeigt eine schematisch leicht vereinfachte Darstellung eines im Beispielsfalle als Zwischenring ausgebildeten Konusringes 1. Dieser Konusring 1 weist bei der dargestellten besonders bevorzugten Ausführungsform einen Trägerring 2 aus metallischem Material auf, der eine erste Konusfläche 3 und eine zweite Konusfläche 4 umfasst. Bei der dargestellten Ausführungsform ist die erste Konusfläche 3 die innere Fläche, während die zweite Konusfläche 4 die Außenfläche darstellt.

Auf der inneren Konusfläche 3 ist bei der dargestellten besonders bevorzugten Ausführungsform ein Reibbelag in Form eines Streusinterbelages angeordnet. Dieser Streusinterbelag ist vor dem Umformen des Trägerringes in die Konusform auf einer Seite des noch ebenen Trägerringes angebracht worden.

Nach diesem Schritt ist der in der Figur dargestellte Ring umgeformt worden, so dass ein Konusring entsteht, auf dem dann der zweite Reibbelag 6 auf der äußeren zweiten Konusfläche 4 aufgebracht worden ist. Dieser zweite Reibbelag ist vorzugsweise ein organischer Reibbelag, der auf die zweite Konusfläche 4 aufgeklebt worden ist.

Grundsätzlich möglich ist es jedoch auch, dass der Streusinterbelag auf der äußeren Konusfläche 4 und der organische Belag auf der inneren Konusfläche 3 angeordnet wird.

### Bezugszeichenliste

- 1: Konusring
- 2: Trägerring
- 3: erste Konusfläche
- 4: zweite Konusfläche
- 5: erster Reibbelag
- 6: zweiter Reibbelag

## Patentansprüche

1. Verfahren zum Herstellen eines Konusringes aus einem ebenen metallischen Trägerring, vorzugsweise in Form eines Zwischenringes einer Mehrfachkonussynchronisierung, mit folgenden Verfahrensschritten:
- Aufbringen eines ersten Reibbelages aus einem ersten Material auf einer ersten Fläche des ebenen Trägerringes;
- Umformen des ebenen mit dem ersten Reibbelag versehenen Trägerringes zu einem Konusring; und
- Aufbringen eines zweiten Reibbelages aus einem zweiten Material auf die zweite, durch die Umformung konische Fläche des Trägerringes.

2. Verfahren nach Anspruch 1, **dadurch gekennzeichnet, dass** die Umformung des ebenen Trägerringes so erfolgt, dass der erste Reibbelag auf der inneren Konusfläche angeordnet ist und der zweite Reibbelag auf die äußere bei der Umformung entstandene Konusfläche des Trägerringes aufgebracht wird.

3. Verfahren nach Anspruch 1, **dadurch gekennzeichnet, dass** die Umformung des ebenen Trägerringes so erfolgt, dass der erste Reibbelag auf der äußeren Konusfläche angeordnet ist und der zweite Reibbelag auf der inneren bei der Umformung entstandenen Konusfläche des Trägerringes aufgebracht wird.

4. Verfahren nach einem der Ansprüche 1 bis 3, **dadurch gekennzeichnet, dass** der erste Reibbelag durch Sintern, vorzugsweise von metallischem Material, auf den Trägerring aufgebracht wird.

5. Verfahren nach einem der Ansprüche 1 bis 4, **dadurch gekennzeichnet, dass** der zweite Reibbelag durch Kleben aufgebracht wird.

6. Verfahren nach einem der Ansprüche 1 bis 5, **dadurch gekennzeichnet, dass** als Material für den zweiten Reibbelag organisches Material, vorzugsweise Karbon, verwendet wird.

7. Konusring (1)
- mit einem metallischen Trägerring (2), der eine erste Konusfläche (3) und eine zweite Konusfläche (4) aufweist;
- mit einem ersten auf der ersten Konusfläche (3) aufgebrachten Reibbelag (5), wobei der erste Reibbelag (5) ein Sinterbelag ist; und
- mit einem zweiten auf der zweiten Konusfläche (4) aufgebrachten Reibbelag (6), **dadurch gekennzeichnet,**
- **dass** der zweite Reibbelag (6) ein organischer Belag ist.

8. Konusring nach Anspruch 7, **dadurch gekennzeichnet, dass** der organische Belag aufgeklebt ist.

9. Konusring nach Anspruch 7 oder 8, **dadurch gekennzeichnet, dass** der organische Belag aus Karbon besteht.

10. Konusring nach einem der Ansprüche 7 bis 9, **dadurch gekennzeichnet, dass** der erste Reibbelag (5) aus metallischem Material besteht.

11. Konusring nach einem der Ansprüche 7 bis 10, **dadurch gekennzeichnet, dass** der Sinterbelag auf einer äußeren oder inneren Konusfläche des Trägerrings (2) und der organische Reibbelag auf der jeweils anderen Konusfläche des Trägerrings (2) angeordnet ist.

## Claims

1. Process for producing a cone ring from a flat metallic carrier ring, preferably in the form of an intermediate ring of a multiple cone synchronizer assembly, having the following process steps:
- applying a first friction lining of a first material to a first surface of the flat carrier ring;
- re-shaping the flat carrier ring provided with the first friction lining to form a cone ring; and
- applying a second friction lining of a second material to the second surface of the carrier ring, conical as a result of the re-shaping.

2. Process according to Claim 1, **characterized in that** the re-shaping of the flat carrier ring is carried out in such a way that the first friction lining is arranged on the inner conical surface and the second friction lining is applied to the outer conical surface of the carrier ring produced during the re-shaping.

3. Process according to Claim 1, **characterized in that** the re-shaping of the flat carrier ring is carried out in such a way that the first friction lining is arranged on the outer conical surface and the second friction lining is applied to the inner conical surface of the carrier ring produced during the re-shaping.

4. Process according to one of Claims 1 to 3, **characterized in that** the first friction lining is applied to the carrier ring by sintering, preferably of metallic material.

5. Process according to one of Claims 1 to 4, **characterized in that** the second friction lining is applied by adhesive bonding.

6. Process according to one of Claims 1 to 5, **characterized in that** the material used for the second friction lining is organic material, preferably carbon.

7. Cone ring (1)
- having a metallic carrier ring (2) which has a first conical surface (3) and a second conical surface (4);
- having a first friction lining (5) applied to the first conical surface (3), the first friction lining (5) being a sintered lining; and
- having a second friction lining (6) applied to the second conical surface (4); **characterized**
- **in that** the second friction lining (6) is an organic lining.

8. Cone ring according to Claim 7, **characterized in that** the organic lining is adhesively bonded on.

9. Cone ring according to Claim 7 or 8, **characterized in that** the organic lining consists of carbon.

10. Cone ring according to one of Claims 7 to 9, **characterized in that** the first friction lining (5) consists of metallic material.

11. Cone ring according to one of Claims 7 to 10, **characterized in that** the sintered lining is arranged on an outer or inner conical surface of the carrier ring (2), and the organic friction lining is arranged on the respective other conical surface of the carrier ring (2).

## Revendications

1. Procédé pour fabriquer une bague conique comprenant une bague support métallique plane, de préférence sous la forme d'une bague intermédiaire d'une synchronisation à cônes multiples, comprenant les étapes de procédé suivantes :
- application d'une première garniture de frottement à base d'un premier matériau sur une première surface de la bague support plane ;
- transformation de la bague support plane, dotée de la première garniture de frottement, en une bague conique ; et
- application d'une seconde garniture de frottement à base d'un second matériau sur la seconde surface, de forme conique due à la transformation, de la bague support.

2. Procédé selon la revendication 1, **caractérisé en ce que** la transformation de la bague support plane s'effectue de telle sorte que la première garniture de frottement est disposée sur la première surface conique et la seconde garniture de frottement est appliquée sur la surface conique extérieure, formée lors de la transformation, de la bague support.

3. Procédé selon la revendication 1, **caractérisé en ce que** la transformation de la bague support plane s'effectue de telle sorte que la première garniture de frottement est disposée sur la surface conique extérieure et la seconde garniture de frottement est appliquée sur la surface conique intérieure, formée lors de la transformation, de la bague support.

4. Procédé selon l'une quelconque des revendications 1 à 3, **caractérisé en ce que** la première garniture de frottement est appliquée par frittage, de préférence de matériau métallique, sur la bague support.

5. Procédé selon l'une quelconque des revendications 1 à 4, **caractérisé en que** la seconde garniture de frottement est appliquée par collage.

6. Procédé selon l'une quelconque des revendications 1 à 5, **caractérisé en ce qu'**on utilise comme matériau pour la seconde garniture de frottement du matériau organique, de préférence du carbone.

7. Bague conique (1) comportant
- une bague support (2) métallique, qui présente une première surface conique (3) et une seconde surface conique (4) ;
- une première garniture de frottement (5) appliquée sur la première surface conique (3), la première garniture de frottement (5) étant une garniture frittée, et
- une seconde garniture de frottement (6) appliquée sur la seconde surface conique (4),
**caractérisée en ce que**
- la seconde garniture de frottement (6) est une garniture organique.

8. Bague conique selon la revendication 7, **caractérisée en ce que** la garniture conique est collée dessus.

9. Bague conique selon la revendication 7 ou 8, **caractérisée en ce que** le revêtement organique est à base de carbone.

10. Bague conique selon l'une quelconque des revendications 7 à 9, **caractérisée en ce que** la première garniture de frottement (5) est à base de matériau métallique.

11. Bague conique selon l'une quelconque des revendications 7 à 10, **caractérisée en ce que** la garniture frittée est disposée sur une surface conique extérieure ou intérieure de la bague support (2) et la garniture de frottement organique sur l'autre surface conique respective de la bague support (2).
